# EUROPÄISCHE PATENTSCHRIFT

(11) **EP 3 950 230 B1**
(45) Veröffentlichungstag und Bekanntmachung des Hinweises auf die Patenterteilung: **11.10.2023**
(21) Anmeldenummer: 21188563.7
(22) Anmeldetag: 29.07.2021
(51) Int. Cl.: B25F 5/00

(54) **AKKUPACK FÜR EIN ELEKTROWERKZEUG**
BATTERY PACK FOR AN ELECTRICAL TOOL
BLOC-BATTERIE POUR OUTIL ÉLECTRIQUE

(30) Priorität: 04.08.2020 DE 102020120490
(43) Veröffentlichungstag der Anmeldung: 09.02.2022
(73) Patentinhaber: Einhell Germany AG, 94405 Landau / Isar (DE)
(72) Erfinder: THANNHUBER, Dr. Markus, 94405 Landau (DE); STERNAD, Dr. Michael, 4020 Linz (AT)
(74) Vertreter: Hofstetter, Schurack & Partner

(56) Entgegenhaltungen:
- DE-A1-102008 003 786
- DE-A1-102013 213 267
- DE-B3-102019 107 426

## Beschreibung

Die vorliegende Erfindung betrifft ein Akkupack für ein Elektrowerkzeug, ein Elektrowerkzeug mit einem solchen Akkupack und ein Verfahren zum Betrieb eines Akkupacks für ein Elektrowerkzeug.

Die maximale Leistungsabgabe eines Akkupacks für ein Elektrowerkzeug an das Elektrowerkzeug ist begrenzt. Bei bekannten Elektrowerkzeugen schaltet ein Batteriemanagementsystem des Elektrowerkzeugs oder des Akkupacks die Stromversorgung ab, sobald ein kritischer Grenzwert erreicht wird. Für einen Benutzer des Elektrowerkzeugs ist dies jedoch unvorteilhaft, da das Elektrowerkzeug plötzlich nicht mehr einsatzfähig ist, gegebenenfalls ohne dass dem Benutzer die Ursache hierfür überhaupt bekannt ist.

Dokument DE 10 2019 107 426 B3 beschreibt einen Energiespeicher, beispielsweise ein Akkupack für ein Elektrowerkzeug, wobei ein Zustandsvektor des Energiespeichers gemessen wird, der zum Beispiel einen Strom oder eine Temperatur des Energiespeichers beziehungsweise Akkupacks enthält. Basierend auf dem Strom kann beispielsweise eine Leistung als Verbrauchswert berechnet werden. Ferner wird mittels eines Modells aus dem Zustandsvektor und dem Verbrauchswert ein Prädiktionswert für das Elektrowerkzeug berechnet, der zum Steuern oder Regen verwendet werden kann beziehungsweise zur Bestimmung einer Restlaufzeit des Energiespeichers.

Vor diesem Hintergrund ist es eine Aufgabe der vorliegenden Erfindung, ein verbessertes Konzept für ein Akkupack für ein Elektrowerkzeug anzugeben, durch das der Komfortgrad für den Benutzer des Elektrowerkzeugs erhöht wird.

Diese Aufgabe wird gelöst durch den jeweiligen Gegenstand der unabhängigen Patentansprüche. Vorteilhafte Weiterbildungen und bevorzugte Ausführungsformen sind Gegenstand der abhängigen Ansprüche.

Das verbesserte Konzept beruht auf der Idee, den Benutzer vor dem tatsächlichen Erreichen von Grenzwerten für den Leistungsabfluss von dem Akkupack entsprechend über die Situation zu informieren, wobei eine prädizierte Leistungsabflusscharakteristik zur Beurteilung herangezogen wird.

Gemäß dem verbesserten Konzept wird ein Akkupack für ein Elektrowerkzeug angegeben. Das Akkupack weist wenigstens eine Batteriezelle, insbesondere wenigstens eine Lithium-Ionen-Batteriezelle, und einen Überwachungsschaltkreis auf. Der Überwachungsschaltkreis ist dazu eingerichtet, eine elektrische oder thermische Messgröße des Akkupacks zu bestimmen. Das Akkupack weist eine Steuereinheit auf, die dazu eingerichtet ist, abhängig von der elektrischen oder thermischen Messgröße eine Leistungsabflusscharakteristik des Akkupacks zu bestimmen und abhängig von der bestimmten Leistungsabflusscharakteristik eine zukünftige Leistungsabflusscharakteristik des Akkupacks zu prädizieren. Die Steuereinheit ist außerdem dazu eingerichtet, abhängig von der prädizierten Leistungsabflusscharakteristik wenigstens eine vordefinierte Akzeptanzbedingung zu überprüfen und abhängig von einem Ergebnis der Überprüfung eine Maßnahme zur Benutzerinformation einzuleiten.

Die Steuereinheit kann insbesondere als Steuer- und Regeleinheit des Akkupacks, beispielsweise eines Batteriemanagementsystems, BMS, des Akkupacks, verstanden werden. Zum Bestimmen der Leistungsabflusscharakteristik, zum Prädizieren der Leistungsabflusscharakteristik, zum Prüfen der Akzeptanzbedingung und zum Einleiten der Maßnahme zur Benutzerinformation kann die Steuereinheit eine oder mehrere Prozessoreinheiten, wie beispielsweise Mikrocontroller, feldprogrammierbare Gate-Arrays, FPGAs, oder sonstige integrierte Schaltkreise beinhalten.

Der Überwachungsschaltkreis kann Teil der Steuereinheit sein oder separat zu dieser ausgestaltet sein. Das Akkupack weist insbesondere ein Gehäuse auf innerhalb dessen die wenigstens eine Batteriezelle, der Überwachungsschaltkreis und die Steuereinheit angeordnet sind.

Außerdem weist das Akkupack insbesondere eine Kontaktanordnung zur elektrischen Verbindung des Akkupacks mit dem Elektrowerkzeug auf. Die Kontaktanordnung kann einen oder mehrere elektrische Kontakte, beispielsweise Steckkontakte, beinhalten.

Bei der elektrischen oder thermischen Messgröße des Akkupacks kann es sich um eine Ausgangsspannung, einen Ausgangsstrom oder eine elektrische Ausgangsleistung des Akkupacks handeln, die im Betrieb des Akkupacks, und insbesondere des Elektrowerkzeugs, von dem Akkupack über die Kontaktanordnung an das Elektrowerkzeug abgegeben wird. Bei der Messgröße kann es sich aber auch um eine elektrische oder thermische Messgröße der wenigstens einen Batteriezelle handeln. Beispielsweise kann die Messgröße einer Ausgangsspannung, einem Ausgangsstrom oder einer elektrischen Ausgangsleistung der wenigstens einen Batteriezelle entsprechen. Da sich elektrisch zwischen der Kontaktanordnung und der wenigstens einen Batteriezelle gegebenenfalls weitere Komponenten des Akkupacks angeordnet sein können, sind die Ausgangsgrößen der wenigstens einen Batteriezelle nicht notwendigerweise identisch mit den Ausgangsgrößen des Akkupacks. Bei der Messgröße des Akkupacks kann es sich auch um einen Innenwiderstand der wenigstens einen Batteriezelle handeln. Bei der Messgröße kann es sich auch um eine von der Ausgangsspannung und/oder dem Ausgangsstrom und/oder dem Innenwiderstand und/oder einem Messsignal, das einer Temperatur der wenigstens einen Batteriezelle entspricht, abgeleitete Größe handeln.

Die Leistungsabflusscharakteristik kann beispielsweise einen oder mehrere Messwerte der elektrischen oder thermischen Messgröße des Akkupacks beinhalten oder basierend auf einem oder mehreren Messwerten der elektrischen oder thermischen Messgröße bestimmt oder berechnet werden. Beispielsweise kann die Leistungsabflusscharakteristik einem zeitlichen Verlauf eines Ausgangsstroms des Akkupacks oder der wenigstens einen Batteriezelle oder einem zeitlichen Verlauf der abgegebenen Leistung des Akkupacks oder wenigstens einen Batteriezelle entsprechend oder basierend auf dem jeweiligen zeitlichen Verlauf bestimmt werden. Die Zeitdauer des zeitlichen Verlaufs kann dabei einem vordefinierten, insbesondere gleitenden, Zeitraum entsprechen. Beispielsweise kann die Leistungsabflusscharakteristik auch einer zeitlichen Ableitung des zeitlichen Verlaufs des Ausgangsstroms beziehungsweise der Ausgangsleistung des Akkupacks oder der wenigstens einen Batteriezelle entsprechen. Die Leistungsabfluss-charakteristik kann auch eine oder mehrere charakteristische Kenngrößen des entsprechenden zeitlichen Verlaufs, beispielsweise einen Maximalwert, einen Mittelwert, einen Medianwert oder einen Varianzwert, beinhalten oder basierend darauf bestimmt werden.

Die prädizierte Leistungsabflusscharakteristik entspricht einer prognostizierten Leistungsabflusscharakteristik zu einem zukünftigen Zeitpunkt oder während eines zukünftigen Zeitraums, der nach dem Zeitpunkt beziehungsweise Zeitraum der Bestimmung der Leistungsabflusscharakteristik basierend auf der elektrischen oder thermischen Messgröße liegt.

Der Zeitpunkt der prädizierten Leistungsabflusscharakteristik beziehungsweise ein Endzeitpunkt des Zeitraums der prädizierten Leistungsabflusscharakteristik kann bezogen auf den Zeitpunkt der Prädiktion um ein vorgegebenes Prädiktionsintervall in die Zukunft verschoben sein. Das Prädiktionsintervall kann beispielsweise eine Dauer zwischen 10 ms und 3 s aufweisen, vorzugsweise eine Dauer zwischen 100 ms und 3s oder eine Dauer zwischen 500 ms und 3 s, beispielsweise eine Dauer zwischen 500 ms und 1 s.

Die vordefinierte Akzeptanzbedingung kann eine oder mehrere vordefinierte Regeln beinhalten, anhand derer entschieden werden kann, ob der Leistungsabfluss gemäß der prädizierten Leistungsabflusscharakteristik in einem gewünschten oder akzeptablen Bereich liegt. Ist die wenigstens eine vordefinierte Akzeptanzbedingung erfüllt, so kann insbesondere davon ausgegangen werden, dass während des Prädiktionsintervalls keine signifikante Reduktion der abgegebenen Leistung oder ein Abschalten der Stromversorgung an das Elektrowerkzeug erforderlich ist.

Insbesondere kann das Überprüfen der Akzeptanzbedingung das Vergleichen der prädizierten Leistungsabflusscharakteristik oder einzelner Werte der prädizierten Leistungsabflusscharakteristik mit einem oder mehreren vorgegebenen Grenzwerten beinhalten. Beispielsweise kann es das Überprüfen der Akzeptanzbedingung beinhalten, den prädizierten zeitlichen Verlauf der Ausgangsleistung oder des Ausgangsstroms mit einer vordefinierten Maximalleistung beziehungsweise einem vordefinierten Maximalstrom zu vergleichen. Wird die Maximalleistung beziehungsweise der Maximalstrom während des Prädiktionsintervalls in einer vordefinierten Weise überschritten, beispielsweise mindestens für eine vorgegebene Zeitdauer, so kann beispielsweise die Akzeptanzbedingung verletzt sein.

Insbesondere wird die Maßnahme zur Benutzerinformation nur dann eingeleitet, wenn die wenigstens eine vordefinierte Akzeptanzbedingung verletzt ist. Dabei kann auch eine gestufte Vorgehensweise vorgesehen sein. In diesem Fall kann die wenigstens eine vordefinierte Akzeptanzbedingung mehrere Akzeptanzbedingungen beinhalten. Je nachdem welche Akzeptanzbedingung verletzt und welche nicht verletzt sind, kann eine bestimmte Maßnahme zur Benutzerinformation individuell eingeleitet werden.

Bei weniger kritischen verletzten Akzeptanzbedingungen kann beispielsweise eine visuelle, akustische oder haptische Warnung als Benutzerinformation eingeleitet werden. Bei kritischeren verletzten Akzeptanzbedingungen kann auch eine Ausgangsleistung des Akkupacks kurzfristig beziehungsweise vorübergehend reduziert werden, um den Benutzer einerseits entsprechend zu informieren und andererseits das Erreichen der tatsächlichen Grenze für die Leistungsabgabe zu verhindern.

Dementsprechend kann der Benutzer frühzeitig auf das mögliche Erreichen einer Leistungsgrenze des Akkupacks oder des Elektrowerkzeugs hingewiesen werden und entsprechend darauf reagieren, ohne dass der Betrieb des Akkupacks beziehungsweise des Elektrowerkzeugs notwendigerweise unterbrochen werden muss. Dadurch lässt sich der Benutzerkomfort entscheidend verbessern.

Gemäß der Erfindung ist der Überwachungsschaltkreis dazu eingerichtet, die Leistungsabflusscharakteristik abhängig von einer ersten und/oder zweiten zeitlichen Ableitung der elektrischen oder thermischen Messgröße zu bestimmen.

Die zeitlichen Ableitungen der elektrischen oder thermischen Messgröße können zur Prädiktion der Leistungsabflusscharakteristik besonders geeignete Größen darstellen, sodass eine besonders zuverlässige Prädiktion erreicht werden kann. Gemäß zumindest einer Ausführungsform des Akkupacks ist der Überwachungsschaltkreis dazu eingerichtet, einen Innenwiderstand der wenigstens einen Batteriezelle zu messen und die Leistungsabflusscharakteristik abhängig von dem Innenwiderstand zu bestimmen und/oder die zukünftige Leistungsabflusscharakteristik abhängig von dem Innenwiderstand oder einem zeitlichen Verlauf des Innenwiderstands zu prädizieren.

Gemäß zumindest einer Ausführungsform des Akkupacks ist der Überwachungsschaltkreis dazu eingerichtet, eine Temperatur der wenigstens einen Batteriezelle oder einer Umgebung der wenigstens einen Batteriezelle zu messen und die Leistungsabflusscharakteristik abhängig von dem der Temperatur zu bestimmen und/oder die zukünftige Leistungsabflusscharakteristik abhängig von der Temperatur oder einem zeitlichen Verlauf der Temperatur zu prädizieren.

Gemäß zumindest einer Ausführungsform des Akkupacks ist der Überwachungsschaltkreis dazu eingerichtet, eine Ausgangsstromstärke der wenigstens einen Batteriezelle oder des Akkupacks als elektrische oder thermische Messgröße zu bestimmen.

Die Ausgangsstromstärke stellt dabei eine besonders gut geeignete Größe zur Beurteilung der Leistungsabflusscharakteristik dar und stellt eine technisch einfach beschränkbare Größe des Akkupacks dar.

Gemäß zumindest einer Ausführungsform ist die Steuereinheit dazu eingerichtet, einen zeitlichen Verlauf der Ausgangsstromstärke oder einer von der Ausgangsstromstärke abhängigen Größe über einen vordefinierten Zeitraum zu bestimmen, um die Leistungsabflusscharakteristik zu bestimmen.

Bei der von der Ausgangsstromstärke abhängigen Größe kann es sich beispielsweise um die zeitliche Ableitung der Ausgangsstromstärke handeln. Der Zeitraum kann auch als gleitender Zeitraum mit einer vordefinierten Länge ausgestaltet sein.

Gemäß zumindest einer Ausführungsform ist die Steuereinheit dazu eingerichtet, die prädizierte Leistungsabflusscharakteristik für einen vordefinierten zukünftigen Zeitraum zu prädizieren, also für einen Zeitraum, der zumindest teilweise nach dem Zeitpunkt der Prädiktion liegt.

Gemäß zumindest einer Ausführungsform weist das Akkupack eine Ausgabeeinheit auf, und die Steuereinheit ist dazu eingerichtet, die Ausgabeeinheit abhängig von dem Ergebnis der Überprüfung zum Erzeugen eines akustischen Ausgabesignals und/oder eines visuellen Ausgabesignals und/oder eines haptischen Ausgabesignals anzusteuern, um die Maßnahmen zur Benutzerinformation einzuleiten.

Entsprechend kann die Ausgabeeinheit eine Vorrichtung zur Erzeugung von Tönen oder Geräuschen, insbesondere einen Lautsprecher, einen Piezoschallwandler, einen Summer oder einen sonstigen akustischen Signalgeber, beinhalten. Die Ausgabeeinheit kann zum Erzeugen des visuellen Ausgabesignals eine Lichtsignalanzeige, ein Display oder eines oder mehrere einzelne Leuchtelemente, beispielsweise Leuchtdioden, aufweisen. Zum Erzeugen des haptischen Ausgabesignals kann die Ausgabeeinheit einen entsprechenden haptischen Aktuator, insbesondere zum Erzeugen einer Vibration eines Teils oder einer Komponente des Akkupacks oder des Elektrowerkzeugs oder zur Erzeugung einer erhöhten Gegenkraft, beispielsweise an einem stufenlosen Ein-Ausschalter eines Griffstücks des Elektrowerkzeugs, beispielsweise eines Akkubohrschraubers, beinhalten.

Das Erzeugen des Ausgabesignals kann dann als die Maßnahme zur Benutzerinformation oder als ein Teil der Maßnahme zur Benutzerinformation verstanden werden, die durch das Ansteuern der Ausgabeeinheit mittels der Steuereinheit eingeleitet wird.

Durch das akustische, visuelle und/oder haptische Ausgabesignal kann der Benutzer des Akkupacks oder des Elektrowerkzeugs unmittelbar auf das voraussichtliche Erreichen der Leistungsgrenze hingewiesen werden, so dass dieser schnell und ohne seinen Arbeitsfluss zu unterbrechen reagieren kann. Die Reaktion des Benutzers kann dabei je nach Art des Elektrowerkzeugs unterschiedlich ausfallen. Beispielsweise kann der Benutzer manuell eine Motordrehzahl, ein Motordrehmoment oder eine Leistung des Elektrowerkzeugs, eine Vorschubgeschwindigkeit des Elektrowerkzeugs oder einen Anpressdruck des Elektrowerkzeugs auf ein zu bearbeitendes Werkstück, wenn es sich bei dem Elektrowerkzeug beispielsweise um eine Säge, eine Bohrmaschine, einen Bohrschrauber oder ein sonstiges Elektrowerkzeug handelt, bei dem die erforderliche elektrische Leistung von der Vorschubgeschwindigkeit und/oder dem Anpressdruck abhängt. Der Benutzer kann aber auch prüfen, ob das Werkstück gegebenenfalls verklemmt ist oder ob sonstige Beeinträchtigungen der Bearbeitung vorliegen, welche einen erhöhten Leistungsabfluss verursachen können.

Gemäß zumindest einer Ausführungsform weist das Akkupack eine Leistungsbegrenzungsvorrichtung auf und die Steuereinheit ist dazu eingerichtet, abhängig von dem Ergebnis der Überprüfung die Leistungsbegrenzungsvorrichtung zum Begrenzen einer Ausgangsleistung des Akkupacks anzusteuern, um die Maßnahme zur Benutzerinformation einzuleiten.

Das Begrenzen der Ausgangsleistung kann dabei insbesondere als Begrenzung des Ausgangsstroms des Akkupacks und/oder der Ausgangsspannung des Akkupacks realisiert werden.

Die Maßnahme zur Benutzerinformation beinhaltet dabei also insbesondere das Begrenzen oder Reduzieren der Ausgangsleistung.

Das Begrenzen oder Reduzieren der Ausgangsleistung ist für den Benutzer des Elektrowerkzeugs unmittelbar oder mittelbar am Verhalten des Elektrowerkzeugs zu erkennen. Beispielsweise kann sich eine Geräuschentwicklung oder ein haptisches Verhalten des Elektrowerkzeugs dadurch verändern. Auch die mechanische Leistung des Elektrowerkzeugs kann entsprechend begrenzt oder reduziert werden. Neben der reinen Benutzerinformation kann das Begrenzen oder Reduzieren der Ausgangsleistung gleichzeitig als Sicherheitsmaßnahme begriffen werden, mit der ein Überschreiten der Leistungsgrenze des Akkupacks verhindert wird.

Das Begrenzen oder Reduzieren der Ausgangsleistung kann beispielsweise für einen vordefinierten Zeitraum oder für mehrere aufeinanderfolgende Zeiträume beziehungsweise gepulst erfolgen, um den Benutzer entsprechend zu informieren.

Die Leistungsbegrenzungsvorrichtung kann beispielsweise ein oder mehrere Schaltelemente, insbesondere Transistoren, beispielsweise Leistungstransistoren, beinhalten. Die Leistungstransistoren können beispielsweise als bipolare Leistungstransistoren, Leistungs-Feldeffekttransistoren, Leistungs-FETs, oder als Bipolartransistoren mit isolierter Gate-Elektrode, IGBT, ausgestaltet sein.

Die Steuereinheit kann den Leistungstransistor beispielsweise in einem linearen Bereich betreiben oder in einem Sättigungsbereich, um die Ausgangsleistung des Akkupacks zu begrenzen oder zu reduzieren. Insbesondere kann die Steuereinheit ein entsprechendes Steuersignal oder Gatesignal, beispielsweise eine Gatespannung, erzeugen, um den Widerstand des Leistungstransistors entsprechend einzustellen oder den Leistungstransistor mit einer entsprechenden Frequenz ein- und auszuschalten, beispielsweise gemäß einer Pulsweitenmodulation.

Dadurch kann eine besonders zielgenaue Begrenzung oder Reduzierung der Ausgangsleistung des Akkupacks erzielt werden.

Gemäß zumindest einer Ausführungsform weist das Akkupack eine Kommunikationsschnittstelle zum Datenaustausch mit dem Elektrowerkzeug auf und die Steuereinheit ist dazu eingerichtet, abhängig von dem Ergebnis der Überprüfung über die Kommunikationsschnittstelle ein Warnsignal auszugeben, insbesondere an das Elektrowerkzeug auszugeben, um die Maßnahme zur Benutzerinformation einzuleiten.

Die Maßnahme zur Benutzerinformation kann dann durch das Elektrowerkzeug eingeleitet werden oder zum Teil eingeleitet werden. Das Elektrowerkzeug kann abhängig von dem Warnsignal beispielsweise die Motordrehzahl oder das Motordrehmoment begrenzen oder reduzieren und/oder ein akustisches, visuelles und/oder haptisches Informationssignal zur Benutzerinformation erzeugen. Das tatsächliche Einleiten der Benutzerinformation wird also in solchen Ausführungsformen von dem Akkupack zu dem Elektrowerkzeug verlagert. Dadurch können die Komplexität des Akkupacks und gegebenenfalls Bauraum für das Akkupack reduziert werden. Insbesondere können in dem Elektrowerkzeug gegebenenfalls für sonstige Zwecke ohnehin vorhandene Aktuatoren oder Ausgabeeinheiten synergetisch genutzt werden.

Gemäß zumindest einer Ausführungsform ist die Steuereinheit dazu eingerichtet, eine Extrapolation der bestimmten Leistungsabflusscharakteristik durchzuführen, insbesondere eine lineare Extrapolation, um die prädizierte Leistungsabfluss-charakteristik zu prädizieren.

Diese Ausführungsformen haben den Vorteil, dass ein Rechenaufwand zum Prädizieren der Leistungsabflusscharakteristik gering ist, so dass Hardware- und Softwarekosten reduziert werden können.

Dazu können Erfahrungswerte und Extrapolationsmodelle eingesetzt werden, um die Extrapolation möglichst genau zu gestalten. Beispielsweise kann bei einem kontinuierlichen Anstieg des Ausgangsstroms des Akkupacks mit einer gewissen Wahrscheinlichkeit davon ausgegangen werden, dass der Ausgangsstrom auch während des Prädiktionsintervalls weiter entsprechend ansteigt.

Gemäß zumindest einer Ausführungsform weist die Steuereinheit ein Speicherelement auf, auf dem ein maschinell trainierbarer und insbesondere maschinell trainierter Algorithmus gespeichert ist. Der Algorithmus ist insbesondere dazu trainiert, abhängig von der bestimmten Leistungsabflusscharakteristik, die prädizierte Leistungsabflusscharakteristik zu prädizieren.

Die Steuereinheit ist insbesondere dazu eingerichtet, den Algorithmus anzuwenden, insbesondere auf die bestimmte Leistungsabflusscharakteristik anzuwenden, also die bestimmte Leistungsabflusscharakteristik als Eingang für den Algorithmus zu verwenden, um die prädizierte Leistungsabflusscharakteristik zu prädizieren.

Der Algorithmus kann dabei beispielsweise auf einem Algorithmus zur Zeitreihenprognose, einem verdeckten Markow-Modell oder einem künstlichen neuronalen Netzwerk basieren.

Zum Trainieren des Algorithmus kann dabei auf die Leistungsabflusscharakteristiken aus Laborversuchen und/oder unter realen Anwendungsbedingungen zurückgegriffen werden. Das Elektrowerkzeug und/oder das Akkupack kann zum Erzeugen entsprechender Trainingsdaten beispielsweise mit einem Datenlogger ausgestattet werden. Durch die Aufzeichnung ausreichend langer Zeiträume unter verschiedenen Betriebsbedingungen des Elektrowerkzeugs, kann so eine ausreichend große Datenbasis zum Trainieren des Algorithmus geschaffen werden.

Durch die Verwendung des maschinell trainierbaren Algorithmus kann eine höhere Zuverlässigkeit und Genauigkeit der Prädiktion der Leistungsabflusscharakteristik ermöglicht werden, als dies beispielsweise mit statistischen Modellen zur Vorhersage möglich wäre.

Gemäß zumindest einer Ausführungsform beinhaltet der Algorithmus ein künstliches neuronales Netzwerk, insbesondere ein rekurrentes neuronales Netzwerk, RNN.

Gemäß dem verbesserten Konzept wird auch ein Elektrowerkzeug mit einem Akkupack nach dem verbesserten Konzept angegeben.

Gemäß dem verbesserten Konzept wird auch ein Verfahren zum Betrieb eines Akkupacks für ein Elektrowerkzeug angegeben, und damit insbesondere ein Verfahren zum Betreiben des Elektrowerkzeugs mit dem Akkupack. Dazu wird eine elektrische oder thermische Messgröße des Akkupacks bestimmt, insbesondere mittels eines Überwachungsschaltkreises des Akkupacks. Abhängig von der elektrischen oder thermischen Messgröße wird eine Leistungsabflusscharakteristik des Akkupacks bestimmt, insbesondere mittels einer Steuereinheit des Akkupacks. Abhängig von der bestimmten Leistungsabflusscharakteristik wird, insbesondere mittels der Steuereinheit, eine zukünftige Leistungsabflusscharakteristik des Akkupacks prädiziert und abhängig von der prädizierten Leistungsabflusscharakteristik wenigstens eine vordefinierte Akzeptanzbedingung überprüft. Abhängig von einem Ergebnis der Überprüfung wird eine Maßnahme zur Benutzerinformation, insbesondere mittels der Steuereinheit eingeleitet.

Gemäß zumindest einer Ausführungsform des Verfahrens wird eine Extrapolation der bestimmten Leistungsabflusscharakteristik durchgeführt, insbesondere mittels der Steuereinheit, um die prädizierte Leistungsabflusscharakteristik zu prädizieren.

Gemäß zumindest einer Ausführungsform wird, insbesondere mittels der Steuereinheit, die bestimmte Leistungsabflusscharakteristik einem maschinell trainierbaren, insbesondere trainierten, Algorithmus als Eingabe zugeführt, um abhängig von der bestimmten Leistungsabflusscharakteristik die prädizierte Leistungsabflusscharakteristik zu prädizieren.

Mit anderen Worten kann die prädizierte Leistungsabflusscharakteristik als Ausgabe des Algorithmus verstanden werden.

Weitere Ausführungsformen des Verfahrens nach dem verbesserten Konzept folgen direkt aus den verschiedenen Ausgestaltungsformen des Akkupacks nach dem verbesserten Konzept und des Elektrowerkzeugs nach dem verbesserten Konzept und jeweils umgekehrt. Insbesondere kann ein Akkupack oder ein Elektrowerkzeug nach dem verbesserten Konzept dazu eingerichtet oder programmiert sein, ein Verfahren nach dem verbesserten Konzept durchzuführen oder es führt ein solches Verfahren durch.

In den Figuren zeigen:
- Fig. 1: eine schematische Darstellung einer beispielhaften Ausführungsform eines Elektrowerkzeugs nach dem verbesserten Konzept;
- Fig. 2: eine schematische Darstellung einer beispielhaften Ausführungsform eines Akkupacks nach dem verbesserten Konzept; und
- Fig. 3: eine Blockdarstellung einer weiteren beispielhaften Ausführungsform eines Akkupacks nach dem verbesserten Konzept.

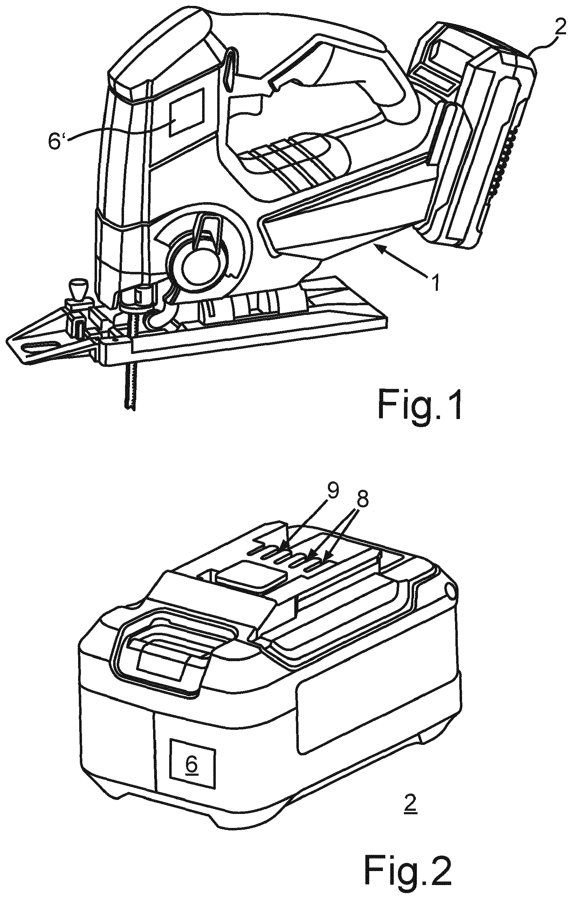

Fig. 1 zeigt schematisch eine beispielhafte Ausführungsform eines Elektrowerkzeugs 1 nach dem verbesserten Konzept, das beispielsweise als akkubetriebene Stichsäge ausgestaltet ist. Das verbesserte Konzept ist jedoch nicht auf derartige Elektrowerkzeugs beschränkt. Insbesondere können alle Elektrowerkzeuge, die einen Motor aufweisen, der mittels eines Akkupacks 2, insbesondere eines Akkupacks 2 nach dem verbesserten Konzept, mit Energie versorgt werden kann, gemäß dem verbesserten Konzept ausgestaltet sein.

In manchen Ausführungsformen kann das Elektrowerkzeug 1 eine Ausgabeeinheit 6' zur Ausgabe eines visuellen akustischen und/oder haptischen Signals an einen Benutzer des Elektrowerkzeugs 1 aufweisen.

Das Elektrowerkzeug 1 weist ein Akkupack 2 nach dem verbesserten Konzept auf, das im dargestellten Zustand der Fig. 1 mit dem Elektrowerkzeug 1 mechanisch und elektrisch verbunden ist.

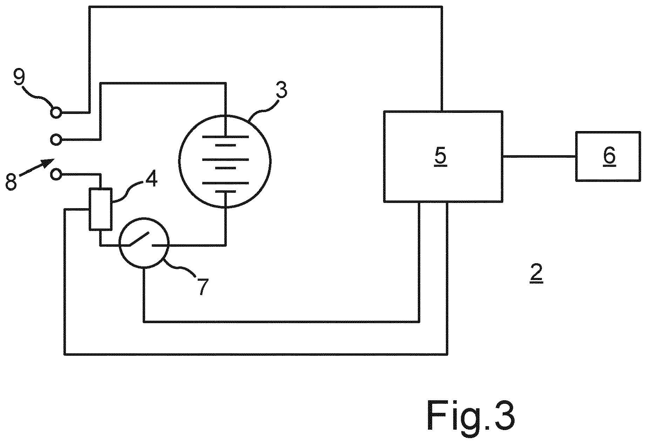

Fig. 2 zeigt schematisch das Akkupack 2 nach dem verbesserten Konzept, wie es beispielsweise in einem Elektrowerkzeug 1 der Fig. 1 eingesetzt werden kann. Fig. 3 zeigt ein schematisches Blockdiagramm des Akkupacks 2 der Fig. 2.

Das Akkupack 2 weist wenigstens eine Batteriezelle 3 sowie einen Überwachungsschaltkreis 4 auf, der eine elektrische oder thermische Messgröße des Akkupacks 2, beispielsweise einen Ausgangsstrom des Akkupacks 2, bestimmen kann. Der Ausgangsstrom des Akkupacks 2 kann an einer Kontaktanordnung 8 zur elektrischen Verbindung des Akkupacks 2 mit dem Elektrowerkzeug 1 an das Elektrowerkzeug 1 übertragen werden.

Das Akkupack 2 weist außerdem eine Steuereinheit 5 auf, die mit dem Überwachungsschaltkreis 4 gekoppelt ist, um von diesem entsprechende Messwerte der Messgröße zu erhalten.

Im Betrieb des Elektrowerkzeugs 1 beziehungsweise des Akkupacks 2 liefert das Akkupack 2 den Ausgangsstrom zum Antrieb des Antriebmotors über die Kontaktanordnung 8 an das Elektrowerkzeug 1. Der Überwachungsschaltkreis bestimmt die Messgröße, und die Steuereinheit bestimmt abhängig von der Messgröße eine Leistungsabflusscharakteristik des Akkupacks 2, beispielsweise einen zeitlichen Verlauf des Ausgangsstroms oder der zeitlichen Ableitung des Ausgangsstroms über einen vorgegebenen Zeitraum, der beispielsweise als gleitender Zeitraum ausgestaltet sein kann.

Abhängig von der bestimmten Leistungsabflusscharakteristik prädiziert die Steuereinheit 5 eine zukünftige Leistungsabflusscharakteristik des Akkupacks, also einen zusätzlichen Verlauf oder zusätzliche Kennwerte für den Ausgangsstrom beziehungsweise dessen zeitliche Ableitung.

Je nach Ausgestaltungsform des Akkupacks kann die Steuereinheit 5 dazu unterschiedliche Methoden verwenden. Zum einen ist es möglich, aus der abhängig von der Messgröße bestimmten Leistungsabflusscharakteristik eine Extrapolation durchzuführen, um die zukünftige Leistungsabflusscharakteristik während eines Prädiktionsintervalls zu prädizieren. Alternativ kann ein künstliches neuronales Netzwerk oder ein sonstiger maschinenlernbarer Algorithmus, der für diese Aufgabe vorab spezifisch trainiert wurde, auf der Steuereinheit 5 gespeichert sein. Die Steuereinheit 5 liefert dann dem Algorithmus die bestimmte Leistungsabflusscharakteristik als Eingabe und erhält die prädizierte Leistungsabflusscharakteristik als Ausgabe des Algorithmus.

Abhängig von der prädizierten Leistungsabflusscharakteristik kann die Steuereinheit 5 eine oder mehrere vordefinierte Akzeptanzbedingungen überprüfen. Insbesondere kann die Steuereinheit anhand der prädizierten Leistungsabflusscharakteristik überprüfen, ob die während des Prädiktionsintervalls zu erwartenden Ausgangsströme über durch vorgegebene Regeln implementierten Grenzen liegen. Abhängig von einem Ergebnis der Überprüfung kann die Steuereinheit 5 dann eine Maßnahme zur Benutzerinformation einleiten.

Optional kann das Akkupack 2 eine Ausgabeeinheit 6 zur Ausgabe eines akustischen, visuellen und/oder haptischen Ausgabesignals zur Benutzerinformation aufweisen. Die Steuereinheit 5 kann dann die Ausgabeeinheit 6 entsprechend abhängig von dem Ergebnis der Überprüfung zur Ausgabe des jeweiligen Signals ansteuern.

Beispielsweise kann das Akkupack 2 zwischen der Kontaktanordnung 8 und der wenigstens einen Batteriezelle 3 einen oder mehrere Leistungstransistoren 7, von denen der Übersichtlichkeit halber nur einer in Fig. 3 dargestellt ist, enthalten, deren Gatespannung mittels der Steuereinheit gesteuert werden kann. Durch hochfrequentes Schalten des Leistungstransistors 7 kann die Steuereinheit 5 als Maßnahme zur Benutzerinformation auch eine Ausgangsspannung, den Ausgangsstrom oder eine Ausgangsleistung des Akkupacks 2 reduzieren und/oder begrenzen.

Beispielsweise kann das Akkupack 2 auch eine Kommunikationsschnittstelle 9 zum Datenaustausch mit dem Elektrowerkzeug 1 aufweisen. Die Kommunikationsschnittstelle 9 kann entsprechend den elektrischen Kontakten der Kontaktanordnung 8 oder separat dazu ausgebildet sein. In solchen Ausführungsformen kann die Steuereinheit 5 abhängig von dem Ergebnis der Überprüfung auch ein Warnsignal über die Kommunikationsschnittstelle 9 an das Elektrowerkzeug 1 übertragen. Das Elektrowerkzeug 1 kann dann mittels der Ausgabeeeinheit 6' oder anderweitig eine Maßnahme zur Benutzerinformation einleiten. Beispielsweise kann das Elektrowerkzeug 1 abhängig von dem Warnsignal auch eine Drehzahl oder Leistung des Elektrowerkzeugs 1 oder des Motors reduzieren oder beschränken.

In verschiedenen Ausgestaltungsformen ist eine mehrstufige Eskalation der Maßnahmen zur Benutzerinformation vorgesehen. Beispielsweise kann als präventive Vorindikation eine visuelle oder akustische Benutzerinformation über die Ausgabeeinheit 6 des Akkupacks 2 und/oder über die Ausgabeeinheit 6` des Elektrowerkzeugs 1 erzeugt werden. Als nächste Stufe kann beispielsweise die Drehzahl oder Leistung des Elektrowerkzeugs durch das Elektrowerkzeug 1 abhängig von dem Warnsignal reduziert oder beschränkt werden. Als weiterer Eskalationsschritt kann wie beschrieben die Ausgangsspannung oder die Ausgangsleistung beziehungsweise der Ausgangsstrom des Akkupacks 2 begrenzt, reduziert oder vollständig abgeschaltet werden, um den Benutzer einerseits zu informieren und andererseits die Leistungsabgabe in den akzeptablen Grenzen zu halten.

Gemäß dem verbesserten Konzept wird also, wie insbesondere bezüglich der Figuren beschrieben, eine prädiktive Auswertung einer zu erwartenden Leistungsabflusscharakteristik vorgenommen, um den Benutzer möglichst frühzeitig über einen gegebenenfalls bevorstehenden Konflikt mit vorgegebenen Leistungsgrenzen zu informieren und so schlussendlich den Benutzerkomfort zu erhöhen, ohne Sicherheitsanforderungen zu reduzieren.

### BEZUGSZEICHENLISTE:

- 1: Elektrowerkzeug
- 2: Akkupack
- 3: Batteriezellen
- 4: Überwachungsschaltkreis
- 5: Steuereinheit
- 6, 6': Ausgabeeinheiten
- 7: Leistungstransistor
- 8: Kontaktanordnung
- 9: Kommunikationsschnittstelle

## Patentansprüche

1. Akkupack für ein Elektrowerkzeug (1), das Akkupack (2) aufweisend
- wenigstens eine Batteriezelle (3) und einen Überwachungsschaltkreis (4), der dazu eingerichtet ist, eine elektrische oder thermische Messgröße des Akkupacks (2) zu bestimmen;
- eine Steuereinheit (5), die dazu eingerichtet ist,
- abhängig von einer ersten und/oder zweiten zeitlichen Ableitung der elektrischen oder thermischen Messgröße eine Leistungsabflusscharakteristik des Akkupacks (2) zu bestimmen;
- abhängig von der bestimmten Leistungsabflusscharakteristik eine zukünftige Leistungsabflusscharakteristik des Akkupacks (2) zu prädizieren;
- abhängig von der prädizierten Leistungsabflusscharakteristik wenigstens eine vordefinierte Akzeptanzbedingung zu überprüfen; und
- abhängig von einem Ergebnis der Überprüfung eine Maßnahme zur Benutzerinformation einzuleiten.

2. Akkupack nach Anspruch 1, wobei der Überwachungsschaltkreis (4) dazu eingerichtet ist, eine Ausgangsstromstärke der wenigstens einen Batteriezelle (3) oder des Akkupacks (2) als die elektrische oder thermische Messgröße zu bestimmen.

3. Akkupack nach Anspruch 2, wobei die Steuereinheit (5) dazu eingerichtet ist, eine erste und/oder zweite zeitliche Ableitung der Ausgangsstromstärke oder einer von der Ausgangsstromstärke abhängigen Größe über einen vordefinierten Zeitraum zu bestimmen, um die Leistungsabflusscharakteristik zu bestimmen.

4. Akkupack nach einem der vorhergehenden Ansprüche, wobei die Steuereinheit (5) dazu eingerichtet ist, die prädizierte Leistungsabflusscharakteristik für einen vordefinierten zukünftigen Zeitraum zu prädizieren.

5. Akkupack nach einem der vorhergehenden Ansprüche, wobei das Akkupack (2) eine Ausgabeeinheit (6) aufweist und die Steuereinheit (5) dazu eingerichtet ist, die Ausgabeeinheit (6) abhängig von dem Ergebnis der Überprüfung zum Erzeugen eines akustischen Ausgabesignals und/oder eines visuellen Ausgabesignals und/oder eines haptischen Ausgabesignals anzusteuern, um die Maßnahme zur Benutzerinformation einzuleiten.

6. Akkupack nach einem der vorhergehenden Ansprüche, wobei das Akkupack (2) eine Leistungsbegrenzungsvorrichtung (7) aufweist und die Steuereinheit (5) dazu eingerichtet ist, abhängig von dem Ergebnis der Überprüfung die Leistungsbegrenzungsvorrichtung (7) zum Begrenzen einer Ausgangsleistung des Akkupacks (2) anzusteuern, um die Maßnahme zur Benutzerinformation einzuleiten.

7. Akkupack nach Anspruch 6, wobei die Leistungsbegrenzungsvorrichtung (7) wenigstens einen Leistungstransistor enthält.

8. Akkupack nach einem der vorhergehenden Ansprüche, wobei das Akkupack (2) eine Kommunikationsschnittstelle (9) zum Datenaustausch mit dem Elektrowerkzeug (1) aufweist und die Steuereinheit (5) dazu eingerichtet ist, abhängig von dem Ergebnis der Überprüfung über die Kommunikationsschnittstelle (9) ein Warnsignal auszugeben, um die Maßnahme zur Benutzerinformation einzuleiten.

9. Akkupack nach einem der vorhergehenden Ansprüche, wobei die Steuereinheit (5) dazu eingerichtet ist, eine Extrapolation der bestimmten Leistungsabflusscharakteristik durchzuführen, um die prädizierte Leistungsabflusscharakteristik zu prädizieren.

10. Akkupack nach einem der vorhergehenden Ansprüche, wobei die Steuereinheit (5) ein Speicherelement aufweist, auf dem ein maschinell trainierbarer Algorithmus gespeichert ist, der dazu trainiert ist, abhängig von der bestimmten Leistungsabflusscharakteristik die prädizierte Leistungsabflusscharakteristik zu prädizieren.

11. Akkupack nach Anspruch 10, wobei der maschinell trainierbare Algorithmus ein künstliches neuronales Netzwerk beinhaltet.

12. Elektrowerkzeug (1) mit einem Akkupack (2) nach einem der vorhergehenden Ansprüche.

13. Verfahren zum Betrieb eines Akkupacks (2) für ein Elektrowerkzeug (1), wobei
- eine elektrische oder thermische Messgröße des Akkupacks (2) bestimmt wird;
- abhängig von einer ersten und/oder zweiten zeitlichen Ableitung der elektrischen oder thermischen Messgröße eine Leistungsabflusscharakteristik des Akkupacks (2) bestimmt wird;
- abhängig von der bestimmten Leistungsabflusscharakteristik eine zukünftige Leistungsabflusscharakteristik des Akkupacks (2) prädiziert wird;
- abhängig von der prädizierten Leistungsabflusscharakteristik wenigstens eine vordefinierte Akzeptanzbedingung überprüft wird; und
- abhängig von einem Ergebnis der Überprüfung eine Maßnahme zur Benutzerinformation eingeleitet wird.

14. Verfahren nach Anspruch 13, wobei zum Einleiten der Maßnahme zur Benutzerinformation abhängig von dem Ergebnis der Überprüfung
- ein akustisches Ausgabesignal und/oder ein visuelles Ausgabesignal und/oder ein haptisches Ausgabesignal erzeugt wird; und/oder
- eine Ausgangsleistung des Akkupacks (2) begrenzt wird; und/oder
- ein Warnsignal an das Elektrowerkzeug (1) ausgegeben wird.

15. Verfahren nach einem der Ansprüche 13 oder 14, wobei
- eine Extrapolation der bestimmten Leistungsabflusscharakteristik durchgeführt wird, um die prädizierte Leistungsabflusscharakteristik zu prädizieren; und/oder
- die bestimmte Leistungsabflusscharakteristik einem maschinell trainierbaren Algorithmus als Eingabe zugeführt wird, um abhängig von der bestimmten Leistungsabflusscharakteristik die prädizierte Leistungsabflusscharakteristik zu prädizieren.

## Claims

1. A battery pack for an electric tool (1), the battery pack (2) comprising
- at least one battery cell (3) and a monitoring circuit (4), which is configured to determine an electrical or thermal measured variable of the battery pack (2);
- a control unit (5), which is configured
- to determine a power drain characteristic of the battery pack (2) depending on a first and/or second time derivative of the electrical or thermal measured variable;
- to predict a future power drain characteristic of the battery pack (2) depending on the determined power drain characteristic;
- to examine at least one predefined acceptance condition depending on the predicted power drain characteristic; and
- to initiate a measure for user information depending on a result of the examination.

2. The battery pack according to claim 1, wherein the monitoring circuit (4) is configured to determine an output current strength of the at least one battery cell (3) or of the battery pack (2) as the electrical or thermal measured variable.

3. The battery pack according to claim 2, wherein the control unit (5) is configured to determine a first and/or second time derivative of the output current strength or of a variable depending on the output current strength over a predefined period of time to determine the power drain characteristic.

4. The battery pack according to any one of the preceding claims, wherein the control unit (5) is configured to predict the predicted power drain characteristic for a predefined future period of time.

5. The battery pack according to any one of the preceding claims, wherein the battery pack (2) comprises an output unit (6) and the control unit (5) is configured to control the output unit (6) depending on the result of the examination for generating an acoustic output signal and/or a visual output signal and/or a haptic output signal to initiate the measure for user information.

6. The battery pack according to any one of the preceding claims, wherein the battery pack (2) comprises a power limiting device (7) and the control unit (5) is configured to control the power limiting device (7) for limiting an output power of the battery pack (2) depending on the result of the examination to initiate the measure for user information.

7. The battery pack according to claim 6, wherein the power limiting device (7) contains at least one power transistor.

8. The battery pack according to any one of the preceding claims, wherein the battery pack (2) comprises a communication interface (9) for data exchange with the electric tool (1) and the control unit (5) is configured to output a warning signal via the communication interface (9) depending on the result of the examination to initiate the measure for user information.

9. The battery pack according to any one of the preceding claims, wherein the control unit (5) is configured to perform an extrapolation of the determined power drain characteristic to predict the predicted power drain characteristic.

10. The battery pack according to any one of the preceding claims, wherein the control unit (5) comprises a storage medium, on which an algorithm trainable by machine is stored, which is trained to predict the predicted power drain characteristic depending on the determined power drain characteristic.

11. The battery pack according to claim 10, wherein the algorithm trainable by machine includes an artificial neural network.

12. An electric tool (1) with a battery pack (2) according to any one of the preceding claims.

13. A method for operating a battery pack (2) for an electric tool (1), wherein
- an electrical or thermal measured variable of the battery pack (2) is determined;
- a power drain characteristic of the battery pack (2) is determined depending on a first and/or second time derivative of the electrical or thermal measured variable;
- a future power drain characteristic of the battery pack (2) is predicted depending on the determined power drain characteristic;
- at least one predefined acceptance condition is examined depending on the predicted power drain characteristic; and
- a measure for user information is initiated depending on a result of the examination.

14. The method according to claim 13, wherein for initiating the measure for user information, depending on the result of the examination
- an acoustic output signal and/or a visual output signal and/or a haptic output signal are generated; and/or
- an output power of the battery pack (2) is limited; and/or
- a warning signal is output to the electric tool (1).

15. The method according to any one of claims 13 or 14, wherein
- an extrapolation of the determined power drain characteristic is performed to predict the predicted power drain characteristic; and/or
- the determined power drain characteristic is supplied to an algorithm trainable by machine as an input to predict the predicted power drain characteristic depending on the determined power drain characteristic.

## Revendications

1. Bloc-batterie pour un outil électrique (1), le bloc-batterie comprenant
- au moins une cellule de batterie (3) et un circuit de surveillance (4), lequel est conçu pour déterminer une grandeur de mesure électrique ou thermique du bloc-batterie (2) ;
- une unité de commande (5), qui est configurée pour
- déterminer une caractéristique de drain de puissance du bloc-batterie (2) en fonction d'une première et/ou d'une deuxième dérivée dans le temps de la grandeur de mesure électrique ou thermique ;
- prédire une future caractéristique de drain de puissance du bloc-batterie (2) en fonction de la caractéristique de drain de puissance déterminée ;
- vérifier au moins une condition d'acceptation prédéfinie en fonction de la caractéristique de drain de puissance prédite ; et
- initier une mesure destinée à l'information de l'utilisateur en fonction d'un résultat de la vérification.

2. Bloc-batterie selon la revendication 1, le circuit de surveillance (4) étant conçu pour déterminer une intensité de courant de sortie de l'au moins une cellule de batterie (3) ou du bloc-batterie (2) en tant que la grandeur de mesure électrique ou thermique.

3. Bloc-batterie selon la revendication 2, l'unité de commande (5) étant conçue pour déterminer une première et/ou une deuxième dérivée dans le temps de l'intensité de courant de sortie ou une grandeur dépendante de l'intensité de courant de sortie sur une période prédéfinie, afin de déterminer la caractéristique de drain de puissance.

4. Bloc-batterie selon l'une des revendications précédentes, l'unité de commande (5) étant conçue pour prédire la caractéristique de drain de puissance prédite pour une future période prédéfinie.

5. Bloc-batterie selon l'une des revendications précédentes, le bloc-batterie (2) possédant une unité de sortie (6) et l'unité de commande (5) étant conçue pour commander l'unité de sortie (6) en fonction du résultat de la vérification en vue de générer un signal de sortie sonore et/ou un signal de sortie visuel et/ou un signal de sortie haptique, afin d'initier la mesure destinée à l'information de l'utilisateur.

6. Bloc-batterie selon l'une des revendications précédentes, le bloc-batterie (2) possédant un dispositif de limitation de puissance (7) et l'unité de commande (5) étant conçue pour commander le dispositif de limitation de puissance (7) en vue de limiter une puissance de sortie du bloc-batterie (2) en fonction du résultat de la vérification, afin d'initier la mesure destinée à l'information de l'utilisateur.

7. Bloc-batterie selon la revendication 6, le dispositif de limitation de puissance (7) contenant au moins un transistor de puissance.

8. Bloc-batterie selon l'une des revendications précédentes, le bloc-batterie (2) possédant une interface de communication (9) destinée à l'échange de données avec l'outil électrique (1) et l'unité de commande (5) étant conçue pour délivrer un signal d'avertissement par le biais de l'interface de communication (9) en fonction du résultat de la vérification, afin d'initier la mesure destinée à l'information de l'utilisateur.

9. Bloc-batterie selon l'une des revendications précédentes, l'unité de commande (5) étant conçue pour effectuer une extrapolation de la caractéristique de drain de puissance déterminée afin de prédire la caractéristique de drain de puissance prédite.

10. Bloc-batterie selon l'une des revendications précédentes, l'unité de commande (5) possédant un élément de mémoire sur lequel est enregistré un algorithme pouvant être entraîné automatiquement, lequel est entraîné pour prédire la caractéristique de drain de puissance prédite en fonction de la caractéristique de drain de puissance déterminée.

11. Bloc-batterie selon la revendication 10, l'algorithme pouvant être entraîné automatiquement contenant un réseau neuronal artificiel.

12. Outil électrique (1) comprenant un bloc-batterie (2) selon l'une des revendications précédentes.

13. Procédé pour faire fonctionner un bloc-batterie (2) pour un outil électrique (1),
- une grandeur de mesure électrique ou thermique du bloc-batterie (2) étant déterminée ;
- une caractéristique de drain de puissance du bloc-batterie (2) étant déterminée en fonction d'une première et/ou d'une deuxième dérivée dans le temps de la grandeur de mesure électrique ou thermique ;
- une future caractéristique de drain de puissance du bloc-batterie (2) étant prédite en fonction de la caractéristique de drain de puissance déterminée ;
- au moins une condition d'acceptation prédéfinie étant vérifiée en fonction de la caractéristique de drain de puissance prédite ; et
- une mesure destinée à l'information de l'utilisateur étant initiée en fonction d'un résultat de la vérification.

14. Procédé selon la revendication 13,
- un signal de sortie sonore et/ou un signal de sortie visuel et/ou un signal de sortie haptique étant généré ; et/ou
- une puissance de sortie du bloc-batterie (2) étant limitée ; et/ou
- un signal d'avertissement étant délivré à l'outil électrique (1)
en vue d'initier la mesure destinée à l'information de l'utilisateur en fonction du résultat de la vérification.

15. Procédé selon l'une des revendications 13 ou 14,
- une extrapolation de la caractéristique de drain de puissance déterminée étant effectuée afin de prédire la caractéristique de drain de puissance prédite ; et/ou
- la caractéristique de drain de puissance déterminée étant acheminée en tant qu'entrée à un algorithme pouvant être entraîné automatiquement, afin de prédire la caractéristique de drain de puissance prédite en fonction de la caractéristique de drain de puissance déterminée.
